# FASCICULE DE BREVET EUROPEEN

(11) **EP 1 585 783 B1**
(45) Date de publication et mention de la délivrance du brevet: **06.06.2018**
(21) Numéro de dépôt: 04704264.3
(22) Date de dépôt: 22.01.2004
(51) Int. Cl.: C08J 5/22, H01M 8/1081, B01D 67/00, B01D 69/14, B01D 71/00, H01M 8/1023, H01M 8/1025, H01M 8/1027, H01M 8/103, H01M 8/1039, H01M 8/1044, H01M 8/1062

(54) **MATERIAU HYBRIDE ORGANIQUE-INORGANIQUE COMPRENANT UNE PHASE MINERALE MESOPOREUSE ET UNE PHASE ORGANIQUE, MEMBRANE ET PILE A COMBUSTIBLE**
ANORGANISCH-ORGANISCHES HYBRID-MATERIAL ENTHALTEND EINE ANORGANISCHE MESOPORÖSE PHASE UND EINE ORGANISCHE PHASE, MEMBRAN UND BRENNSTOFFZELLE
ORGANIC-INORGANIC HYBRID MATERIAL CONTAINING A MINERAL MESOPOROUS PHASE AND AN ORGANIC PHASE, A MEMBRANE AND FUEL CELL

(30) Priorité: 23.01.2003 FR 0300726
(43) Date de publication de la demande: 19.10.2005
(73) Titulaire: Commissariat à l'Énergie Atomique et aux Énergies Alternatives, 75015 Paris (FR)
(72) Inventeur: VALLE, Karine, F-37000 Tours (FR); BELLEVILLE, Philippe, F-37000 Tours (FR); SANCHEZ, Clément, F-91100 Gif Sur Yvette (FR)
(74) Mandataire: Ahner, Philippe
(86) Numéro de dépôt international: PCT/FR2004/050025
(87) Numéro de publication internationale: WO 2004/067611

(56) Documents cités:
- WO-A-00/77080
- WO-A-01/84657
- WO-A-02/05370
- WO-A-02/41043
- WO-A-92/06775
- WO-A-99/12994
- WO-A1-02/10218
- DE-A- 4 225 952
- US-B1- 6 270 846
- LACONTI A B ET AL: "Proton exchange membrane electrochemical capacitors and fuel cells for pulse power applications" PROCEEDINGS OF THE INTERNATIONAL POWER SOURCES SYMPOSIUM. CHERRY HILL, NJ., JUNE 22 - 25, 1992, NEW YORK, IEEE, US, vol. SYMP. 35, 22 juin 1992 (1992-06-22), pages 298-301, XP010103434 ISBN: 0-7803-0552-3
- PATENT ABSTRACTS OF JAPAN vol. 2003, no. 05, 12 mai 2003 (2003-05-12) & JP 2003 016834 A (KAGAWA INDUSTRY SUPPORT FOUNDATION;KONDO KAGAKU KOGYO KK), 17 janvier 2003 (2003-01-17)
- MARK A HARMER ET AL: "Nafion resin-silica nano-composition solid catalysts. Microstructure-processing-property correlations", GREEN CHEMI, ROYAL SOCIETY OF CHEMISTRY, GB, 1 January 2000 (2000-01-01), pages 7-14, XP009114769, ISSN: 1463-9262

## Description

La présente invention concerne un matériau hybride organique-inorganique comprenant une phase minérale mésoporeuse et une phase organique.

L'invention concerne, en outre, une membrane et une électrode comprenant ce matériau.

L'invention a trait également à une pile à combustible comprenant au moins une telle membrane et/ou au moins une telle électrode.

L'invention est relative enfin à un procédé de préparation du matériau hybride organique-inorganique.

Le domaine technique de l'invention peut être défini, de manière générale, comme celui des matériaux poreux et plus particulièrement des matériaux dits mésoporeux.

Plus précisément, l'invention se situe dans le domaine des matériaux mésoporeux destiné à des utilisations en électrochimie, en particulier dans les piles à combustibles, telles que les « PEMFC » (« Polymeric Electrolyte Membrane Fuel Cell », en anglais).

On sait qu'un des éléments essentiels des piles à combustible, par exemple celles utilisées dans le secteur de l'automobile et de la téléphonie portable est la membrane échangeuse protonique.

Ces membranes structurent le coeur de la pile à combustible et doivent par conséquent présenter de bonnes performances en conduction protonique, ainsi qu'une faible perméabilité aux gaz réactants (H₂/O₂). Les propriétés des matériaux qui constituent les électrolytes solides polymériques formant ces membranes et qui doivent résister à des milliers d'heures de fonctionnement de la pile, sont essentiellement la stabilité chimique, et la résistance à l'hydrolyse et à l'oxydation, notamment la résistance hydrothermale, et une certaine flexibilité mécanique.

Les membranes préparées à partir d'ionomères perfluorés, particulièrement le Nafion®, remplissent ces exigences pour des températures de fonctionnement inférieures à 90°C.

Cette température est cependant insuffisante pour permettre l'intégration des piles à combustible comprenant de telles membranes dans un véhicule. Cette intégration suppose en effet l'augmentation de la température de fonctionnement vers 100-150°C dans le but d'accroître le rendement de conversion courant/énergie et donc l'efficacité de la pile, mais également d'améliorer le contrôle de la gestion thermique en diminuant le volume du radiateur.

Par ailleurs, l'efficacité conductrice des membranes protoniques est fortement liée à la présence d'eau dans le milieu. Or à des températures supérieures à 100°C, l'eau est rapidement évacuée de la membrane, la conductivité chute et la perméabilité au combustible s'accroît. A ces températures, cette diminution des performances peut s'accompagner d'une dégradation de la membrane. Pour résoudre les problèmes de dessèchement des membranes dans les piles à combustibles à haute température, à savoir au moins égale à 100°C, le maintien d'une humidité relative maximale 80-100% est nécessaire mais difficilement réalisable par une source externe.

Par contre, il est connu que l'insertion ou la croissance d'une charge hygroscopique « in situ » favorise la rétention d'eau à l'intérieur du polymère, retarde ce processus de déshydratation du milieu protonique et assure ainsi la conduction des protons. Outre son caractère hydrophile cette charge fonctionnelle peut posséder intrinsèquement des propriétés conductrices et ainsi accroître les performances de la membrane.

Afin d'augmenter la rétention d'eau des membranes dans les piles à combustibles à haute température, de nombreuses membranes composites ont été développées, notamment par croissance de nanoparticules inorganiques hydrophiles. Ces nano-charges minérales peuvent être synthétisées par voie sol-gel dans des matrices organiques sulfonées perfluorées, mais aussi dans des matrices constituées de composés polyaromatiques, ou de polyéthers. Ces membranes sont nommées présentement membranes hybrides organiques-inorganiques.

Les particules minérales peuvent être :
- conductrices, elles sont alors de type acide comme par exemple l'acide tungstophosphorique, ou tungstosilicique, ou antimonique, ou de type phosphates et phosphonates métalliques comme le phosphate de zirconium [1-7] ;
- non conductrices et simplement hydrophiles comme les oxydes de métaux et de métalloïdes TiO₂, SiO₂...[8-19].

Plus précisément, le document [10] décrit notamment des matériaux nanocomposites Silice-Nafion® dans lesquels des particules de Nafion® sont présentes dans les pores d'un réseau de silice qui n'est pas un réseau mésoporeux structuré à porosité ouverte.

Outre l'amélioration de la gestion de l'eau à haute température, la diminution de la perméabilité de la membrane aux combustibles est démontrée dans ces membranes hybrides organiques-inorganiques par rapport aux membranes classiques de type Nafion® par exemple. La stabilité thermique et chimique reste toutefois limitée car inhérente à la matrice polymère organique sulfoné utilisée.

Les travaux présentés récemment par Rozière et al. [19] ont trait à la fonctionnalisation du réseau silicate par un groupement amine qui améliore l'interaction entre la phase inorganique et le polymère organique via des liaisons iono-covalentes.

Autrement dit, le document [19] décrit un matériau comportant d'une part un polymère présentant des groupes acides, et d'autre part, un composant organique qui est un oxyde métallique contenant au moins un groupement fonctionnel permettant une interaction et une relation spatiale avec les groupes acides, par exemple sulfonique.

Les recherches menées par Honma et al. [20-21] et Park et al. [22] sur la croissance de matrices hybrides organiques-inorganiques continues par dispersion d'hétéropolyacides respectivement dans des copolymères poly(isocyanopropyl)silsesquioxanes-polymère organique (PEG, PPO, PTMO) ou dans des cocondensats de glycidyloxypropyltriméthoxysilane (GLYMO) et de tétraéthoxysilane ouvrent de nouvelles perspectives d'utilisation de chaînes polymères thermostables.

Même si les hétéropolyacides minéraux restent très attractifs par leur conductivité intrinsèque, leur incorporation à des taux de charges importants (30 à 70% en masse) dans des polymères peu ou non conducteurs pose généralement des problèmes d'élution progressive et conséquente lors du fonctionnement de la pile du fait de leur solubilité dans l'eau.

Parallèlement aux matériaux composites ou hybrides organiques-inorganiques, décrits plus haut, les matériaux mésoporeux initialement imaginés pour la catalyse, c'est-à-dire essentiellement la silice et les aluminosilicates, ont commencé à susciter l'attention de certains électrochimistes.

Rappelons que les matériaux dits mésoporeux, sont des solides qui présentent au sein de leur structure des pores possédant une taille comprise typiquement entre 2 et 80 nm, qui est intermédiaire entre celle des micropores et celle des macropores.

Typiquement, les matériaux mésoporeux sont des oxydes métalliques amorphes ou cristallins dans lesquels les pores sont généralement répartis de manière aléatoire avec une distribution très large de la taille des pores.

Les matériaux mésoporeux structurés, dénommés matériaux « mésostructurés », correspondent quant à eux à des réseaux poreux structurés qui présentent un agencement spatial organisé de mésopores. Cette périodicité spatiale des pores est caractérisée par l'apparition d'au moins un pic à bas angle dans un diagramme de diffusion des rayons X ; ce pic est associé à une distance de répétition qui est généralement comprise entre 2 et 50 nm. La mésostructure est vérifiée par microscopie électronique en transmission.

Dans ce cadre, le procédé sol-gel offre des stratégies innovantes dans la construction de ces édifices mésoporeux organisés, notamment par polymérisation inorganique au sein de systèmes moléculaires organisés (SMO) de tensioactifs ou au sein de systèmes polymériques organisés (SPO) de copolymères à blocs.

En présence d'agents texturants de type SMO, cette chimie douce permet également de synthétiser, à partir de précurseurs inorganiques et organométalliques, de tels réseaux mésostructurés à nature organominérale appelés matériaux hybrides organiques-inorganiques. Les propriétés de ces matériaux hybrides organiques-inorganiques mésoporeux dépendent non seulement de la nature chimique des composantes organique et inorganique, mais également de la synergie qui peut apparaître entre ces deux chimies.

C'est la raison pour laquelle ces matériaux sont souvent dénommés matériaux « multifonctionnels ».

Le degré d'organisation est gouverné par la nature de ces deux entités organique et inorganique mais aussi par l'agencement multiéchelle de cet arrangement. Ainsi, l'intégration dans une structure mésoporeuse ordonnée, dans les « murs » comme dans les pores, de fonctionnalités chimiques capables d'induire des propriétés spécifiques présente un grand intérêt dans diverses applications (catalyse, filtration, électrochimie...) [34] .

Colomer et al. [23-24] ont préparé des silices mésoporeuses non organisées par co-agrégation de nanoparticules de silice de différentes tailles ou par croissance contrôlée (pH) de silice colloïdale. Ils ont étudié l'impact de telles porosités sur la conductivité protonique en milieu acide de ces silices pour les PEMFCs. Le traitement thermique élevé vers 500-700°C qui est nécessaire à la génération de la porosité et la consolidation de la silice mésoporeuse limite néanmoins cette technique à des réseaux purement inorganiques.

A contrario, la structuration de la silice mésoporeuse synthétisée par l'utilisation de surfactants ne nécessite pas de traitement thermique élevé et autorise ainsi une fonctionnalisation organique lors de la croissance du réseau [25]. De plus, la structure de ces matériaux est souvent bien définie. Cette organisation, liée à la grande surface spécifique, joue un rôle important pour améliorer la conduction des protons au travers du réseau hydrophile. Minami et al. [26-28] ont imprégné ce type de silice par de l'acide sulfurique ou phosphorique en étudiant l'influence de la taille des pores et de la surface spécifique sur la conductivité et la porosité. Les propriétés atteintes en terme de conductivité sont très intéressantes de l'ordre de 2-3.10⁻¹ S/cm.

Par ailleurs, différentes silices hybrides organiques-inorganiques mésostructurées possédant une fonctionnalité SO₃H [29-31] ou PO₃H₂ [32] dans les pores offrent un potentiel intéressant pour les piles à combustibles bien qu'essentiellement développées pour des applications catalytiques. Kaliaguine et al. [33] qui travaillent dans le domaine électrochimique ont effectué des mesures de conductivité et d'adsorption d'eau dans ce type de composés. Ces silices présentent dans l'ensemble un caractère hydrophile prononcé et les mesures de conductivité sont intéressantes pour des systèmes non optimisés, elles sont de l'ordre de 10⁻² S/cm à 80°C sous 100% d'humidité relative.

Le document WO-A1-02/10218 décrit l'encapsulation de biomacromolécules à l'intérieur d'un matériau hybride nanoporeux ou mésoporeux préparé par une réaction sol-gel impliquant un agent tensio-actif.

Les récentes références bibliographiques ci-dessus concernant l'éventuelle utilisation dans les dispositifs électrochimiques des matériaux mésoporeux, tels que les silices mésoporeuses mésostructurés construites par SMO et SPO ne peuvent donner lieu à une application directe en pile à combustibles. En effet, il est impossible de mettre les matériaux tels que décrits et mentionnés dans ces documents sous la forme de membranes.

Il existe donc un besoin pour un matériau mésoporeux qui puisse être mis sous la forme d'une membrane, en particulier d'une membrane homogène et flexible.

Il existe encore un besoin pour un matériau mésoporeux qui soit thermiquement et chimiquement stable et résistant à l'hydrolyse et à l'oxydation.

Il existe ensuite un besoin pour un tel matériau mésoporeux pouvant en outre être pourvu d'une conductivité, en particulier d'une conductivité ionique, de préférence protonique, élevée, et pouvant ainsi être mis en oeuvre sous forme de membrane dans des dispositifs électrochimiques, tels que des piles à combustible à des températures de fonctionnement élevées, par exemple voisines de 100 à 150°C.

Ce matériau, dans le cadre d'une telle utilisation, doit permettre au contraire des membranes de l'art antérieur, par exemple à base d'ionomères perfluorés, une rétention d'eau élevée, même à haute température afin d'éviter le dessèchement de la membrane, et doit posséder une conductivité élevée et une faible perméabilité au combustible à haute température, associée à une absence de dégradation de la membrane.

Le but de la présente invention est de fournir un matériau hybride organique-inorganique mésoporeux qui réponde à l'ensemble des besoins indiqués ci-dessus.

Le but de la présente invention est encore de fournir un matériau mésoporeux qui ne présente pas les inconvénients, défauts et désavantages des matériaux de l'art antérieur et qui, s'il est muni de fonctions conductrices, puisse être utilisé dans un dispositif électrochimique, tel qu'une pile à combustible, en présentant d'excellentes performances.

Ce but et d'autres encore sont atteints, conformément à l'invention par un matériau hybride organique-inorganique selon la revendication 1:
La structure spécifique du matériau hybride organique-inorganique selon l'invention qui comprend une phase minérale mésoporeuse et une phase organique n'a jamais été décrite dans l'art antérieur où il n'est pas fait état de la croissance de réseaux minéraux mésoporeux, en particulier conducteurs et/ou hydrophiles, dans une matrice comprenant un polymère organique mécaniquement structurant.

Notamment, compte tenu de leur grande surface spécifique et de leur structure particulière, l'utilisation des matériaux hybrides organiques-inorganiques mésoporeux selon l'invention dans les membranes conductrices protoniques offre de nombreuses possibilités favorisant la continuité des chemins de conduction à condition d'avoir une porosité ouverte. On entend par porosité ouverte, une porosité formée de pores débouchants et restant accessibles aux espèces conductrices.

Selon une première forme de réalisation du matériau de l'invention, la phase minérale et la phase organique sont continues et entremêlées.

Selon une deuxième forme de réalisation, la phase minérale est discontinue, et dispersée dans la phase organique qui est continue.

La phase minérale peut présenter des fonctions conductrices et/ou hydrophiles sur les surfaces de ses pores.

De même, la phase organique peut présenter des fonctions conductrices et/ou hydrophiles.

Le matériau peut éventuellement comprendre en outre une troisième phase à l'intérieur des pores constituée par au moins un agent tensioactif.

Cet agent tensioactif peut présenter éventuellement des fonctions conductrices et/ou hydrophiles, mais seulement dans le cas où au moins une des autres phases présente des fonctions conductrices et/ou hydrophiles.

Par fonctions conductrices, on entend généralement que ces fonctions présentent une conductivité ionique, de préférence protonique.

Si l'on souhaite disposer d'un matériau conducteur, et dans le cas où celui présente trois phases (organique, minérale, tensioactive), au moins une des phases choisie parmi la phase minérale et la phase organique devra présenter des fonctions conductrices, il est aussi possible que deux quelconques des trois phases présentent des fonctions conductrices, ou que les trois phases présentent des fonctions conductrices.

En général, le matériau selon l'invention présente une porosité ouverte servant de réseau de conduction protonique continu. De préférence, le squelette mésoporeux est hygroscopique et possède une fonctionnalité conductrice dans ses pores (il s'agit par exemple d'un oxyde métallique fonctionnalisé) qui assure ainsi le transport des protons et l'hydratation. La phase polymère organique sert de support et apporte principalement la structuration du milieu de conduction.

Il se produit une véritable synergie entre les deux phases qui communique au matériau selon l'invention une combinaison unique de propriétés physiques, électriques, mécaniques jamais atteintes dans l'art antérieur.

Les fonctions conductrices peuvent être choisies parmi les groupes échangeurs de cations et/ou les groupes échangeurs d'anions.

Les groupes échangeurs de cations peuvent être choisis, par exemple, parmi les groupes suivants : -SO₃M ; -PO₃M₂ ; -COOM et -B(OM)₂, où M représente l'hydrogène, un cation métallique monovalent, ou ⁺NR¹₄ où chaque R¹ représente indépendamment un hydrogène, un radical alkyle ou un radical aryle.

Les groupes échangeurs d'anions peuvent être choisis par exemple parmi les groupes suivants : pyridyle ; imidazolyle ; pyrazolyle ; triazolyle ; les radicaux de formule -⁺NR²₃X⁻, où X représente un anion comme par exemple F, Cl, Br, I, NO₃, SO₄H, ou OR, R étant un radical alkyle ou un radical aryle et où chaque R² représente indépendamment un hydrogène, un radical alkyle, ou un radical aryle ; et les radicaux basiques aromatiques ou non aromatiques contenant au moins un radical choisi parmi les radicaux imidazole, vinylimidazole, pyrrazole, oxazole, carbazole, indole, isoindole, dihydrooxazole, isooxazole, thiazole, benzothiazole, isothiazole, benzoimidazole, indazole, 4,5-dihydropyrazole, 1,2,3-oxadiazole, furazane, 1,2,3-thiadiazole, 1,2,4-thiadiazole, 1,2,3-benzotriazole, 1,2,4-triazole, tetrazole, pyrrole, aniline, pyrrolidine, et pyrrazole.

La phase minérale est généralement constituée par au moins un oxyde choisi parmi les oxydes de métaux, les oxydes de métalloïdes et les oxydes mixtes de ceux-ci.

Ledit oxyde est généralement choisi parmi les oxydes de silicium, titane, zirconium, hafnium, aluminium, tantale, étain, terres rares ou lanthanides tels que europium, cérium, lanthane ou gadolinium, et les oxydes mixtes de ceux-ci.

La phase minérale du matériau selon l'invention est une phase mésostructurée, cela signifie, de manière plus précise, que le réseau mésoporeux présente une structure organisée avec un motif de répétition.

Par exemple, le réseau mésoporeux peut présenter une structure cubique, hexagonale, lamellaire, vermiculaire, vésiculaire ou bicontinue.

La taille des pores du réseau mésoporeux est de 1 à 100 nm, de préférence de 1 à 50 nm.

Le polymère organique de la phase organique doit généralement répondre à un certain nombre de conditions.

Avant tout ledit polymère doit généralement être thermostable ; par thermostable, on entend qu'il garde ses propriétés sous l'action de la chaleur.

Le polymère doit généralement, en outre, ne pas être sensible à l'hydrolyse et à l'oxydation à des températures en particulier élevées, notamment aux températures de fonctionnement des piles à combustible et ce pendant plusieurs milliers d'heures.

En outre, généralement le polymère choisi doit être :
- soluble en milieu hydroalcoolique, alcoolique ou dans les autres solvants miscibles à l'eau puisque l'organisation du surfactant éventuel en milieu liquide, agent texturant de la phase mésoporeuse, s'effectue dans des milieux fortement polaires tels que l'eau ;
- plastique, pour apporter suffisamment de tenue à la phase inorganique mésoporeuse et former un film autosupporté, c'est-à-dire que le polymère peut être qualifié de polymère (mécaniquement) structurant ;
- ce polymère ne doit pas essentiellement jouer le rôle d'agent texturant capable de générer une mésoporosité.

Le polymère organique sera généralement choisi parmi les polyéthercétones (PEK, PEEK, PEEKK) ; les polysulfones (PSU), par exemple le Udel® ; les polyéthersulfones, par exemple le VITREX® ; les polyphényléthersulfones (PPSU), par exemple le Radel® ; les copolymères styrène/éthylène (SES), styrène/butadiène (SBS), styrène/isoprène (SIS), par exemple le KRATON® ; les polyphénylènes, tels que les poly(sulfure de phénylènes) et les poly(oxyde de phénylènes) ; les polyimidazoles, tels que les polybenzimidazoles (PBI) ; les polyimides (PI) ; les polyamideimides (PAI) ; les polyanilines ; les polypyrroles ; les polysulfonamides ; les polypyrazoles, tels que les polybenzopyrazoles ; les polyoxazoles, tels que les polybenzoxazoles ; les polyéthers, tels que les poly(oxyde de tétraméthylène) et les poly(oxyde d'hexaméthylènes) ; les poly(acide (méth)acryliques) ; les polyacrylamides ; les polyvinyles, tels que les poly(esters de vinyle), par exemple les polyvinylacétates, les polyvinylformates, les polyvinylpropionates, les polyvinyllaurates, les polyvinylpalmitates, les polyvinylstéarates, les polyvinyltriméthylacétates, les polyvinylchloroacétates, les polyvinyltrichloroacétates, les polyvinyltrifluoroacétates, les polyvinylbenzoates, les polyvinylpivalates, les polyvinylalcools ; les résines acétales, telles que les polyvinylbutyrales ; les polyvinylpyridines ; les polyvinylpyrrolidones ; les polyoléfines, telles que les polyéthylènes, les polypropylènes, les polyisobutylènes ; les poly(oxyde de styrène) ; les résines fluorées et les polyperfluorocarbones, tels que les polytétrafluoroéthylènes (PTFE), par exemple le TEFLON® ; les poly(fluorure de vinylidènes) (PVDF) ; les polychlorotrifluoroéthylènes (PCTFE) ; les polyhexafluoropropènes (HFP) ; les perfluoroalcoxydes (PFA) ; les polyphosphazènes ; les élastomères siliconés ; les copolymères séquencés comprenant au moins une séquence constituée par un polymère choisi parmi les polymères ci-dessus.

Lorsque le matériau comprend une troisième phase, à l'intérieur des pores constituées par un agent tensioactif, ce dernier peut être choisi parmi : les sels d'alkyltriméthylammonium, d'alkylphosphates et d'alkylsulfonates ; les acides comme l'acide dibenzoyltartrique, l'acide maléique ou les acides gras à chaîne longue ; les bases comme l'urée ou les amines à chaîne longue ; les phospholipides ; les copolymères doublement hydrophiles dont l'amphiphilie est générée in situ par interaction avec un substrat ; les copolymères multiblocs amphiphiles comportant au moins un bloc hydrophobe associé à au moins un bloc hydrophile. Parmi ces polymères, on peut citer, par exemple, les Pluronic® à base de PEO(poly(oxyde d'éthylène)) et PPO(poly(oxyde de propylène)) de type (EO)ₙ-(PO)ₘ-(EO)ₙ, les copolymères de type ((EO)ₙ-(PO)ₘ)ₓ-NCH₂CH₂N-((EO)ₙ-(PO)ₘ)ₓ (Tetronic®), la famille Cₙ(EO)ₘ(OH) (Cₙ=chaîne alkyle et/ou aryle, EO=chaîne oxyde d'éthylène), par exemple Brij®, Triton® ou Igepal®, et la famille (EO)ₘ-sorbitan-Cₙ(Tween®).

Il est important de noter que le polymère organique de la phase organique ne doit en aucun cas être confondu avec un polymère tensioactif éventuel. Bien que dénommés alors tous deux « polymères », ces composés sont différents aussi bien au niveau de leur structure que de leurs effets. Le polymère de la phase organique est un polymère qualifié de (mécaniquement) « structurant », tandis que l'éventuel polymère tensioactif est qualifié de « texturant ».

L'invention concerne en outre une membrane comprenant le matériau tel que décrit ci-dessus, éventuellement déposé sur un support.

Par membrane, on entend que le matériau se présente sous la forme d'un film ou feuille d'une épaisseur par exemple de 50 nm à quelques millimètres, de préférence de 10 à 500 µm.

L'invention a trait aussi à une électrode comprenant le matériau, tel que décrit ci-dessus.

Les excellentes propriétés du matériau selon l'invention, sous forme d'une membrane et/ou d'électrode le rendent particulièrement adéquat à une utilisation dans un dispositif électrochimique, par exemple une pile à combustible.

L'invention concerne donc également une pile à combustible comprenant au moins une membrane et/ou une électrode telle que décrite plus haut.

L'invention a également trait à un procédé de préparation d'un matériau hybride organique-inorganique, tel que décrit plus haut, dans lequel on réalise les étapes suivantes :
a) - on prépare une solution, dans un solvant, d'un précurseur minéral A destiné à constituer la phase minérale mésoporeuse, et éventuellement on l'hydrolyse et on la laisse mûrir ;
b) on prépare une solution dans un solvant, d'un agent tensioactif D structurant, texturant de la phase minérale mésoporeuse ;
c) - on prépare une solution dans un solvant, d'un polymère organique E ;
d) - on ajoute, à l'issue des étapes a), b) et c), la solution d'agent texturant D à la solution de polymère organique E et on homogénéise, puis on ajoute sous agitation au mélange des solutions d'agent tensioactif D et de polymère organique E obtenu la solution de précurseur minéral A ; ou bien
   on ajoute la solution de précurseur A à la solution d'agent tensioactif D et on homogénéise, puis on ajoute sous agitation la solution de polymère organique E ; ou bien
   on ajoute la solution de précurseur A à la solution de polymère organique E et on homogénéise, puis on ajoute sous agitation la solution d'agent tensioactif D;
   moyennant quoi, on obtient une solution hybride organique-inorganique ;
   et on laisse éventuellement mûrir la solution hybride organique-inorganique ainsi obtenue ;
e) - on dépose ou on imprègne la solution hybride organique-inorganique sur un support ;
f) - on réalise une évaporation des solvants dans des conditions contrôlées de pression, de température et d'humidité ;
g) - on effectue un traitement thermique pour réaliser une consolidation du matériau déposé ou imprégné ;
h) - on élimine éventuellement totalement ou partiellement le tensioactif D ;
i) - on sépare ou on élimine éventuellement le support.

Il est à noter que lorsque le matériau préparé est sous la forme, notamment d'une pellicule, ou couche, et qu'il est déposé ou imprégné sur un substrat, par exemple, plan, alors le procédé peut être défini comme un procédé de préparation d'une membrane.

Le procédé selon l'invention présente une suite unique d'étapes spécifiques qui permettent une croissance adéquate par voie « sol-gel » de la phase inorganique (minérale) mésoporeuse éventuellement fonctionnalisée dans la matrice organique polymère. Les conditions du procédé assurent l'obtention d'un matériau, puis d'une membrane homogène et flexible couplée à la construction de la mésoporosité.

Grâce au procédé selon l'invention, la croissance de la phase mésoporeuse dans le milieu polymérique organique structurant est parfaitement maîtrisée, notamment en présence d'un agent tensioactif texturant.

Avantageusement, on ajoute en outre un agent chélatant B à la solution de précurseur minéral A.

Avantageusement, on ajoute en outre un composé C porteur d'une part de fonctions conductrices et/ou hydrophiles et/ou de fonctions précurseurs de fonctions conductrices et/ou hydrophiles ainsi que d'autre part de fonctions susceptibles de se lier à la surfaces des pores du réseau mésoporeux. Avantageusement, le procédé comprend en outre une étape finale de traitement pour libérer ou générer des fonctions conductrices et/ou hydrophiles sur la surface des pores du matériau.

Avantageusement, on laisse mûrir la solution A à une température de 6°C à 300°C, de préférence de 20 à 200°C, à une pression de 100 Pa à 5.10⁶ Pa, de préférence de 1 000 Pa à 2.10⁵ Pa, pendant une durée de quelques minutes à quelques jours, de préférence d'une heure à une semaine.

Avantageusement, on laisse mûrir la solution hybride organique-inorganique obtenue dans l'étape d) à une température de 0°C à 300°C, de préférence de 20°C à 200°C, à une pression de 100 Pa à 5.10⁶ Pa, de préférence de 1 000 Pa à 2.10⁵ Pa, pendant une durée de quelques minutes à quelques jours, de préférence d'une heure à une semaine.

Avantageusement, les solvants sont évaporés à une température de 0 à 300°C, de préférence de 10°C à 160°C, à une humidité relative (HR) de 0 à 100 %, de préférence de 20 à 95 %. Ces conditions d'évaporation permettent notamment l'obtention d'une membrane homogène et flexible et de la mésoporosité voulue.

Dans l'étape e), le dépôt ou l'imprégnation de la solution hybride organique-inorganique sur un support est réalisé, par exemple, par un procédé choisi parmi le procédé de dépôt par enduction centrifuge dit « spin-coating », le procédé de dépôt par trempage-retrait dit « dip-coating », le procédé de dépôt par enduction laminaire dit « meniscus-coating », le procédé de dépôt par pulvérisation dit « spray-coating », le procédé de dépôt par coulée et le procédé de dépôt par évaporation.

L'invention sera mieux comprise à la lecture de la description qui va suivre, donnée à titre illustratif et non limitatif, en référence aux dessins joints dans lesquels :
- la figure 1 est un graphique qui représente les diagrammes d'analyse par diffraction des rayons X aux bas angles des échantillons NAFION®-SiO₂ A, B et C préparés dans l'exemple 1. En ordonnées est porté le nombre de coups et en abscisse d (nm).

Les courbes correspondent depuis le haut vers le bas respectivement aux diagrammes pour les échantillons SiO₂/Nafion : 20% ; SiO₂/Nafion : 50% et SiO₂/Nafion : 10%.
- les figures 2A à 2D donnent des micrographies réalisées en microscopie électronique à balayage qui montrent la morphologie d'une coupe des membranes Nafion-SiO₂-A et Nafion-SiO₂-C (exemple 1).

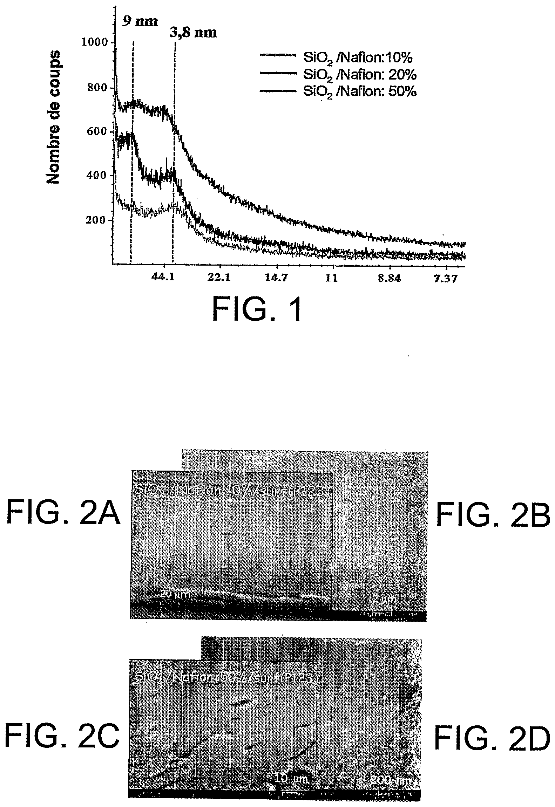

Figures 2A et 2B : membrane SiO₂/Nafion® : 10%/surfactant P123 avec des échelles respectivement de 20 µm et 2 µm.

Figures 2C et 2D : membrane SiO₂/Nafion® : 50%/surfactant P123 à des échelles respectivement de 10 µm et 200 nm.

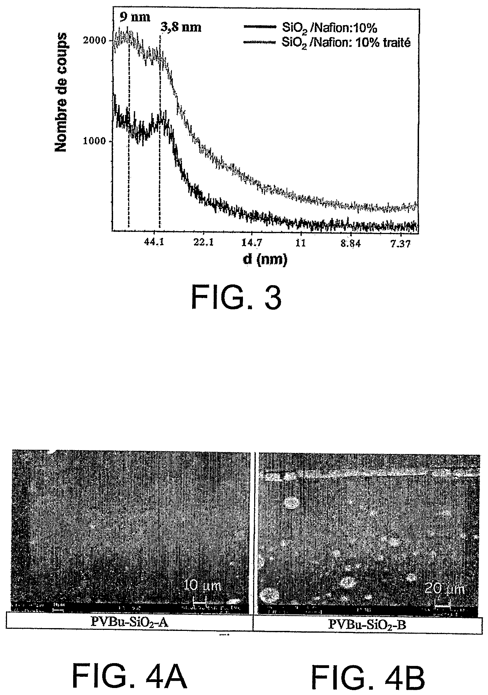

- la figure 3 est un graphique qui représente les diagrammes d'analyse par diffraction des rayons X aux bas angles de l'échantillon NAFION®-SiO₂ A et de ce même échantillon traité chimiquement (exemple 1).

En ordonnées, est porté le nombre de coups, et en abscisse d (nm).

Les courbes correspondent depuis le haut vers le bas respectivement aux diagrammes pour l'échantillon SiO₂/Nafion : 10% traité et pour l'échantillon SiO₂/Nafion : 10% non traité.
- les figures 4A et 4B donnent des micrographies réalisées en microscopie électronique à balayage qui représentent la morphologie d'une coupe des membranes PVBu-SiO₂-A (4A) et PVBu-SiO₂-B (4B) (préparées dans l'exemple 2) avec des échelles respectivement de 10 µm et de 20 µm.

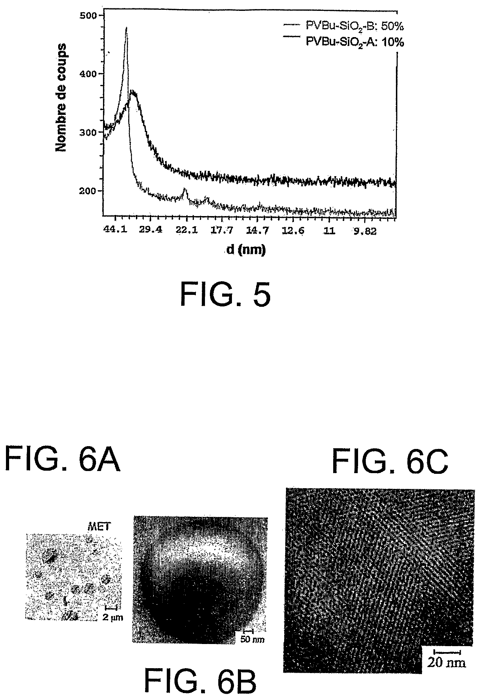

- la figure 5 est un graphique qui représente l'analyse par diffraction des rayons X aux bas angles de l'échantillon PVBu-SiO₂-B : 50% et de l'échantillon PVBu-SiO₂-A : 10% préparés dans l'exemple 2.

En ordonnée, est porté le nombre de coups et en abscisse d (nm).

Les courbes (diagrammes) correspondent depuis le bas vers le haut aux diagrammes pour les échantillons PVBu-SiO₂B : 50% (en clair) ; et PVBu-SiO₂-A : 10% (en foncé).
- les figures 6A à 6C ont une micrographie réalisée en microscopie électronique à transmission de la membrane PVBu-SiO₂-A qui a un taux de silice de 10%.

Les figures 6A, 6B et 6C ont respectivement des échelles de 2 µm, 50 nm et 20 nm.

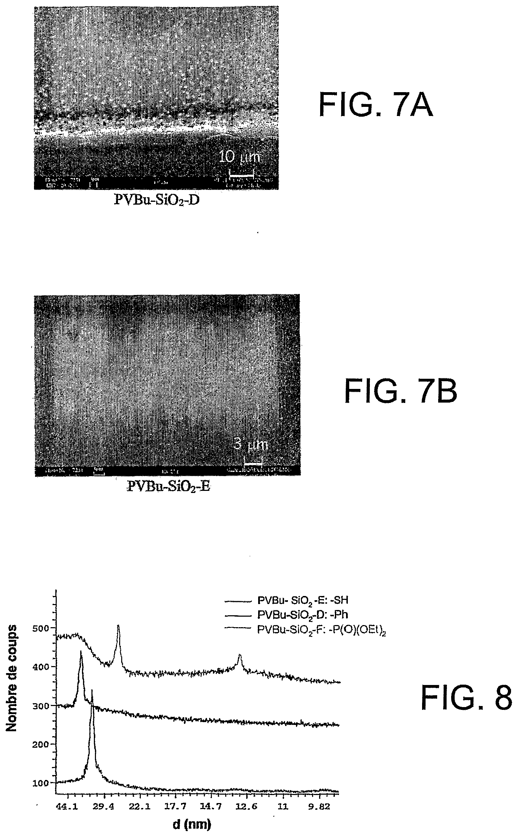

- les figures 7A et 7B donnent des micrographies réalisées en microscopie électronique à balayage qui montrent la morphologie en coupe des membranes PVBu-SiO-D avec une échelle de 10 µm (7A) et PVBu-SiO₂-E (7B) avec une échelle de 3 µm.
- la figure 8 est un graphique qui représente les diagrammes d'analyse par diffraction des rayons X aux bas angles des échantillons PVBu-SiO₂-E : -SH ; PVBu-SiO₂-D : -Ph et PVBu-SiO₂-F : -P(O)(OET)₂.

En ordonnée est porté le nombre de coups, et en abscisse d (nm). Les coupes correspondent depuis le haut vers le bas aux diagrammes pour les échantillons PVBu-SiO₂-F ; PVBu-SiO₂-D, et PVBu-SiO₂-E (exemple 2).

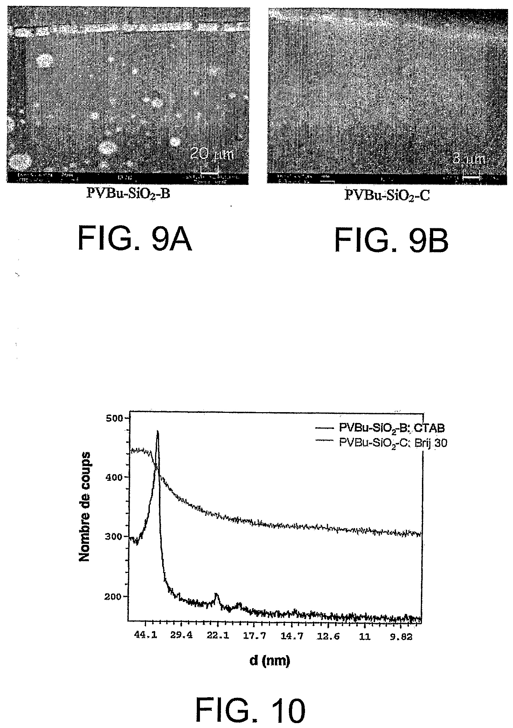

- les figures 9A et 9B donnent des micrographies réalisés en microscopie électronique à balayage qui montrent la morphologie en coupe des membranes PVBu-SiO₂-B avec une échelle de 20 µm (9A) et PVBu-SiO₂-C avec une échelle de 3 µm (9B).
- la figure 10 est un graphique qui représente les diagrammes d'analyse par diffraction des rayons X aux bas angles des échantillons PVBu-SiO₂-B et PVBu-SiO₂-C (exemple 2).

En ordonnée est porté le nombre de coups, et en abscisse d (nm).

Les courbes correspondent depuis le haut vers le bas respectivement aux diagrammes de l'échantillon PVBu-SiO₂-B : CTAB et l'échantillon PVBu-SiO₂-C : Brij®30.

On décrit dans ce qui suit un procédé de préparation selon l'invention d'un matériau hybride organique-inorganique conducteur présentant une phase organique polymérique et une phase minérale mésoporeuse, ainsi qu'éventuellement une troisième phase de tensioactif.

Ce procédé comprend les étapes suivantes :

### 1. Préparation d'une solution sol-gel polymérique

### 1.a Préparation d'une solution précurseur à base de composant inorganique A

La synthèse débute par la préparation du précurseur inorganique qui va constituer l'architecture du réseau mésoporeux minéral.

Typiquement, le précurseur A est choisi parmi les sels de métalloïdes, ou de métaux de transition, ou de lanthanides, comme le silicium, le titane, le zirconium, l'hafnium, l'aluminium, le tantale, l'étain, l'europium, le cérium, le lanthane et le gadolinium, ou les différents alcoxydes métalliques de ces mêmes métaux.

Ce précurseur est dilué en milieu liquide ; le choix du solvant ou du mélange de solvant est choisi en fonction du milieu de miscibilité du polymère utilisé par la suite, typiquement le solvant est choisi parmi les alcools, les éthers et cétones miscibles ou partiellement miscibles à l'eau.

Cette solution est hydrolysée ou non en milieu catalytique acide ou basique) durant une durée déterminée qui peut s'étendre de quelques minutes à plusieurs heures en fonction du choix du précurseur métallique. Notamment dans le cas des précurseurs métalliques à forte réactivité, tels que les précurseurs à base de zirconium ou de titane, un agent chélatant B, comme l'acétylacétone, l'acide acétique ou les phosphonates, peut être introduit pour contrôler l'hydrolyse-condensation du réseau inorganique.

A ce précurseur ou à ce mélange de ces précurseurs métalliques, une quantité molaire C d'un composé organométallique comportant des fonctions hydroxyle ou des fonctions hydrolysables de type alcoxydes, et des fonctions non hydrolysables ou greffées peut être ajoutée en même temps que le(s) composé(s) purement métallique(s) du même type. Ce composé C répond, par exemple, à la formule R³ₓR⁴_{y}M'OR_{(n-(x+y))} : où M' représente un élément du groupe IV, par exemple : Si, ou à la formule ZR³ₓZR⁴_{y}M"OR_{(n-(x+y))} : où M" est un métal p, un métal de transition ou un lanthanide tel que Ti, Zr, Ta, Al, Sn, Eu, Ce, La, Gd, où n est le degré de valence du métal, et Z est une fonction complexante de type monodentate, telle qu'une fonction acétate, phosphonate, phosphate, ou une fonction de type bidentate comme les β-dicétones et leurs dérivés, et les α ou β-hydroxyacides, R³, R⁴, et R sont des substituants organiques de type H, alkyle, aryle. Particulièrement pour R³, ces substituants peuvent comporter des groupements échangeurs de cations : tels que -SO₃M, -PO₃M₂, -COOM, ou -B(OM)₂, dans lesquels M représente H, un cation métallique monovalent, ou N⁺R¹₄, où chaque R¹ représente indépendamment H, alkyle, ou aryle ; ou des précurseurs de groupements échangeurs de cations : SO₂X, COX, ou PO₃X₂, avec X=F, Cl, Br, I ou OR' (R'=alkyle ou aryle) ; ou des groupements échangeurs d'anions : tels que -⁺NR²₃X⁻, ou X représente un anion tel que par exemple F, Cl, Br, I, NO₃, SO₄H ou OR, R représente un radical alkyle ou un radical aryle, et où chaque R² représente indépendamment H, alkyle, aryle, pyridinium, imidazolinium, pyrazolium ou sulfonium, on pourra aussi se reporter à la liste donnée plus haut.

### 1.b Préparation de la solution précurseur à base d'agent texturant D

Le choix de l'agent texturant dépend à la fois de la mésostructure souhaitée, par exemple cubique, hexagonale, lamellaire, vésiculaire ou vermiculaire, de la taille des pores et des murs de cette mésostructure, et de sa solubilisation avec les autres composés de la présente invention, à savoir le polymère et le précurseur minéral. On utilisera généralement des agents texturants surfactés, de types ioniques comme les sels d'alkyltriméthylammonium, d'alkylphosphates et d'alkylsulfonates, ou des acides comme l'acide dibenzoyltartrique, maléique, les acides gras à chaîne longue ou des bases comme l'urée et les amines à chaîne longue, pour construire des édifices mésoporeux dont la taille des pores se limite à quelques nanomètres, par exemple 1,6 à 10nm et la taille des murs à environ 1nm. On peut utiliser aussi des phospholipides, des copolymères doublement hydrophiles dont l'amphiphilie est générée in situ par interaction avec un substrat ou des copolymères multiblocs amphiphiles comportant au moins un bloc hydrophobe associé à au moins un bloc hydrophile typiquement comme les Pluronic® à base de PEO (oxyde de polyéthylène) et PPO (oxyde de polypropylène) de type (EO)ₙ-(PO)ₘ-(EO)ₙ, les copolymères de type ((EO)ₙ-(PO)ₘ)ₓ-NCH₂CH₂N-((EO)ₙ-(PO)ₘ)ₓ (Tetronic®), la famille Cₙ(EO)ₘ(OH) (Cn=chaîne alkyle et/ou aryle, EO=chaîne oxyde d'éthylène), par exemple Brij®, Triton®, Tergitol® ou Igepal®, et la famille (EO)ₘ-sorbitan-Cₙ (Tween®) pour préparer des phases mésoporeuses de plus grande taille de pores (jusqu'à 50 nm). Ces différents blocs pourront également être de nature acrylique PMAc (poly(acide méthacrylique) ou PAAc (poly(acide acrylique), aromatique PS *(Polystyrène),* vinylique PQVP (polyvinylpyridine), PVP (polyvinylpyrrolidone), PVEE (polyvinyléther), ou autre PDMS (polysiloxane). Ces différents blocs peuvent être fonctionnalisés par un groupement conducteur de type échangeurs de cations : -SO₃M, -PO₃M₂, -COOM, ou -B(OM)₂ (M=H, métal cation monovalent, ammonium, ou N⁺R¹₄ avec R¹=H, alkyle, ou aryle) ; ou des précurseurs de groupements échangeurs de cations : SO₂X, COX, ou PO₃X₂ (X=F, Cl, Br, I ou OR' (R'=alkyle ou aryle) ; ou échangeurs d'anions : tels que -⁺NR²₃X⁻, où X représente un anion comme par exemple F, Cl, Br, I, NO₃, SO₄H ou OR, R étant un radical alkyle ou un radical aryle et où chaque R² représente indépendamment H, alkyle, aryle, pyridium, imidazolinium, pyrazolium ou sulfonium, on pourra aussi se reporter à la liste donnée plus haut. Citons par exemple le PSS (acide poly(styrènesulfonique)). L'agent structurant choisi D est dissout ou dilué en milieu hydroalcoolique ou dans un mélange de solvant à base aqueuse compatible avec le milieu de dilution du polymère et du précurseur métallique.

### 1.c Préparation de la solution précurseur à base de polymère organique E

Le polymère organique E choisi pour ses propriétés thermostable, est dilué ou gonflé avec un solvant ou mélange de solvants de type alcools, éthers ou cétones miscibles ou partiellement miscible à l'eau. Typiquement, ce polymère peut être choisi parmi les polymères déjà décrits plus haut.

Ces différents polymères peuvent comprendre des groupements échangeurs de cations : -SO₃M, -PO₃M₂, -COOM, ou -B(OM)₂, avec M=H, métal cation monovalent, ou N⁺R¹₄ (R¹=H, alkyle, ou aryle) ; ou des précurseurs : SO₂X, COX, ou PO₃X₂, avec X=F, Cl, Br, I ou OR' (R'=alkyle ou aryle). Dans un autre modèle, les différents polymères peuvent comprendre des groupements échangeurs d'anions déjà définis plus haut : à savoir : -NR²₃X⁻, où X représente un anion comme par exemple F, Cl, Br, I, NO₃, SO₄H ou OR (R étant un radical alkyle ou un radical aryle) et chaque R² représente indépendamment H, alkyle, aryle, pyridinium, imidazolinium, pyrazolium ou sulfonium, on pourra aussi se reporter à la liste donnée plus haut.

### l.d Préparation de la solution hybride organique-inorganique surfactée F

La solution précurseur à base de tensioactif D est ajoutée à température ambiante à la solution polymère E. Après homogénéisation du milieu, la solution précurseur à base de composante inorganique A comportant une fraction molaire X de C (0≤X≤0,4) est ajouté à température ambiante au milieu réactionnel goutte à goutte. L'agitation à température contrôlée de l'ambiante au reflux est maintenue durant quelques heures. Ce mûrissement de la solution hybride organique-inorganique peut-être prolongé plusieurs jours selon le choix du polymère et du réseau inorganique. La composition de la formulation est [A_{(1-X)}-C_{X}]-D_{Y}-E_{Z}-(H₂O)ₕ où Y= mol (D)/[mol[A_{(1-X)}-C_{X}])+mol(D) et 0≤Y≤0,2 et où Z=g(E)/[g(MO₂)+g(E)] et 0≤Z≤0,9.

### 2. Préparation de la membrane sol-gel polymérique.

La membrane est réalisée par coulée de la solution hybride organique-inorganique et évaporation sous pression, température et humidité contrôlées (15°C<T<80°C). Les conditions d'évaporation sont très importantes pour l'organisation du surfactant en milieu liquide, la formation finale du réseau mésoporeux et l'interpénétration des deux réseaux co-continus. Les membranes obtenues sont ensuite traitées thermiquement entre 50°C et 300°C suivant la nature du polymère pour obtenir la consolidation. Le surfactant présent dans les mésopores de la membrane peut-être éliminé par une méthode douce comme par exemple un lavage en milieu hydroalcoolique acide. Une post-réaction pour libérer ou générer la fonction conductrice liée au réseau inorganique peut-être réalisée. Typiquement ce type de post-réaction peut-être :
une oxydation d'un groupement mercaptan (-SH) par l'eau oxygénée en acide sulfonique SO₃H ou,
l'hydrolyse d'une fonction dialkylphosphonate (RO)₂(O)P- par HCl directement ou via la formation d'un intermédiaire (Me₃SiO)₂(O)P- puis hydrolyse par le MeOH pour former un acide phosphonique -PO₃H₂.

Cette post-réaction peut également correspondre à un greffage des hydroxyles M-OH de surface du réseau inorganique de la membrane par un organoalcoxyde métallique. Dans tous ces cas la membrane est placée en milieu liquide pour permettre son gonflement et la diffusion des entités moléculaires réactives dans les pores de la membrane.

Afin d'éviter toute réaction parasite au sein de la membrane lors du fonctionnement de la pile, la membrane conductrice de protons est purifiée par différents lavages oxydants, acides (ou basiques) et aqueux qui permettent d'éliminer toutes les entités organiques, organominérales ou inorganiques labiles.

Dans le procédé selon l'invention, la croissance de la phase mésoporeuse dans le milieu polymérique organique structurant est parfaitement maîtrisée en présence d'un agent tensioactif texturant. Cette maîtrise est liée notamment au choix judicieux des solvants, tels que alcools, éthers, cétones, miscibles ou partiellement miscibles à l'eau, des précurseurs et des conditions opératoires détaillées plus haut.

La membrane peut être préparée également sous forme de film autosupporté en utilisant des méthodes de dépôt en voie liquide, à savoir l'enduction centrifuge (spin-coating), le trempage-retrait (dip-coating) ou l'enduction laminaire (meniscus-coating). Ce film formé est ensuite décollé de son support par gonflement dans un solvant tel que l'eau.

La technique de pulvérisation dite de « spray-coating » peut être aussi utilisée pour former des aérosols à partir de la solution hybride organique-inorganique et ainsi réaliser l'imprégnation des électrodes afin notamment d'améliorer la compatibilité électrode-membrane lors du montage en pile.

L'invention va maintenant être décrite en référence aux exemples suivants, donnés à titre illustratif et non limitatif.

### Exemple 1 : Membrane hybride à base de Nafion® et de silice

On prépare une solution à base d'un précurseur organominéral de silice : le tétraéthoxysilane TEOS, d'un tensioactif : un copolymère tribloc de type EO₂₀-PO₇₀-EO₂₀ le Pluronic® P123, dans l'éthanol. On dilue dans l'éthanol également le polymère Nafion® à 20% en solution commercialisé par la société Dupont, puis on mélange les deux solutions. Après homogénéisation et mûrissement de la solution hybride 12 heures, la solution est évaporée à 30°C dans une boîte de Pétri pour former une membrane homogène et flexible de 150 µm.

On peut faire varier le rapport massique de silice/polymère dans cette préparation :

Le tableau 1 donne les différentes formulations préparées :

**Tableau 1**

| Echantillon | SiO₂/polymère (% en masse) | Concentration (% en masse) |
|---|---|---|
| NAFION-SiO₂-A | 10 | 2,2 |
| NAFION-SiO₂-B | 20 | 2,2 |
| NAFION-SiO₂-C | 50 | 2,2 |

Les membranes formées se présentent sous forme de films auto-supportés flexibles pour les échantillons NAFION-SiO₂-(A, B), alors que le taux de charge à 50% pour NAFION-SiO₂-C augmente considérablement la rigidité.

La figure 1 présente l'analyse par diffraction des RX aux bas angles des échantillons NAFION-SiO₂-A (courbe du bas), NAFION-SiO₂-B (courbe du haut) et NAFION-SiO₂-C (courbe du milieu) .

Sur les échantillons NAFION-SiO₂-B et NAFION-SiO₂-C on observe l'organisation relative au Nafion® avec un pic de diffraction centré à 3,8 nm appelé « pic ionomère » et on observe une organisation mésoporeuse caractérisée par un pic à 9 nm. Il est connu que le surfactant utilisé le Pluronic® P123 a la caractéristique de former des micelles dont la taille des pores est proche de 9 nm. L'échantillon NAFION-SiO₂-A présente seulement l'organisation relative au Nafion®. Dans notre cas le taux de silice est trop faible pour induire une méso-organisation observable en diffraction des RX.

Les figures 2A à 2D présentent la morphologie d'une coupe des membranes NAFION-SiO₂-A et NAFION-SiO₂-C analysée par microscopie électronique à balayage.

Les figures 2A et 2B sont des micrographies en coupe dans la membrane SiO₂/Nafion : 10%/surfactant (P123) avec des échelles de 20 µm et 2 µm respectivement et les figures 2C et 2D sont des micrographies en coupe de la membrane SiO₂/Nafion : 50%/surfactant (P123) avec des échelles de 10 µm et 200 nm respectivement.

Ces membranes sont transparentes et très homogènes, le réseau silicate est noyé dans le polymère.

Ces membranes ont subi un traitement thermique à 90°C pendant 8 heures. On a effectué un traitement chimique oxydant et acide sur les membranes pour éliminer le surfactant et activer tous les sites acides.

La figure 3 présente l'analyse par diffraction des RX aux bas angles de l'échantillon NAFION-SiO₂-A (SiO₂/Nafion : 10%) traité chimiquement (courbe du haut) ou non traité (courbe du bas foncée).

Après traitement chimique, le pic de diffraction relatif à une organisation mésoporeuse apparaît à 9 nm, ce qui nous indique que nous avons libéré les pores du réseau silicate en éliminant le surfactant.

Nous avons préparé une solution polymère-TEOS sans surfactant selon la préparation citée plus haut avec un taux de silice de 10%. Une membrane NAFION-SiO₂-X est formée de la même manière.

Le tableau 2 donne les valeurs de conductivité ionique de ces deux membranes.

**Tableau 2**

| Echantillon | SiO₂/polymère (% en masse) | Conductivité (S.cm⁻¹) |
|---|---|---|
| NAFION-SiO₂-A | 10 | 8. 10⁻³ S/cm |
| NAFION-SiO₂-X | 10 | 5. 10⁻³ S/cm |

On observe une différence intéressante entre les deux membranes avec un résultat de conductivité en faveur de la membrane construite à partir de tensioactif.

### Exemple 2 : Membrane hybride à base de polyvinylbutyrale PVBu et de silice

On prépare une solution à base d'un précurseur de silice : le tétraéthpxysilane TEOS, d'un précurseur organosilicié un ORMOSIL®, d'un tensioactif, dans le tétrahydrofurane THF. On réalise une préhydrolyse avec une solution aqueuse d'acide chlorhydrique. On dilue également le polymère PVBu dans le THF, puis on mélange les deux solutions. Après homogénéisation et mûrissement de la solution hybride pendant 12 heures, la solution est évaporée à 30°C dans une boîte de pétri pour former une membrane homogène et flexible de 150 µm.

On fait varier deux paramètres dans cette préparation :
1) le rapport massique de silice/polymère
2) la fonctionnalisation de la silice par un ORMOSIL® et la nature de l'ORMOSIL®
3) la nature du tensioactif

Le tableau 3 donne les différentes formulations préparées :

**Tableau 3**

| Echantillon | SiO₂/polymère (% en masse) | ORMOSIL® (% en mole dans SiO₂) | Tensioactif |
|---|---|---|---|
| PVBu-SiO₂-A | 10 | 0 | CTAB |
| PVBu-SiO₂-B | 50 | 0 | CTAB |
| PVBu-SiO₂-C | 50 | 0 | Brij® 30 |
| PVBu-SiO₂-D | 50 | (EtO)₃Si(CH₂)₃SH (30) | CTAB |
| PVBu-SiO₂-E | 50 | (EtO)₃SiC₆H₄ (30) | CTAB |
| PVBu-SiO₂-F | 50 | (EtO)₃Si(CH₂)₃P(O)(OEt)₂ (30) | CTAB |

Ces différentes formulations donnent dans tous les cas des films auto-supportés et transparents pour les échantillons PVBu-SiO₂-(A, C à E) et moyennement flexibles. Les autres échantillons (B, D, F) procurent des membranes semi-opaques et très rigides.

### 1) Etude du rapport massique silice/polymère dans la membrane :

La morphologie des membranes PVBu-SiO₂-A et PVBu-SiO₂-B a été observée en microscopie électronique à balayage dont les clichés sont présentés sur les figures 4A et 4B.
Figure 4A : micrographie en coupe de la membrane PVBu-SiO₂-A (échelle 10 µm)
Figure 4B : micrographie en coupe de la membrane PVBu-SiO₂-B (échelle 20 µm).

On observe des inclusions sphériques de taille plus petite (1-4 µm) dans l'échantillon PVBu-SiO₂-A et, de taille polydisperse et inhomogène en répartition dans l'échantillon PVBu-SiO₂-B (1-20 µm) avec une couche de ségrégation due au fort taux de silice 50%. Ces particules sphériques et cette couche correspondent à du silicate.

La figure 5 présente les diagrammes de diffraction au bas angles de ces membranes. La courbe du bas (claire) est le diagramme pour PVBu-SiO₂-B : 50% et la courbe du haut (foncée) est le diagramme pour PVBu-SiO₂-A : 10%.

Ces diagrammes mettent en évidence une organisation mésoporeuse dans les deux cas avec une mésostructure de type hexagonale cylindrique dans le cas du PVBu-SiO₂-B. La taille des pores est alors d'environ 4 nm.

Les figures 6A à 6C présentent des micrographies en microscopie électronique à transmission de la membrane PVBu-SiO₂-A qui correspond à un taux de silice de 10%. Les figures 6A, 6B, 6C sont avec des échelles respectivement de 2 µm, 50 nm et 20 nm.

L'agrandissement d'une particule sphérique démontre la présence d'une mésostructure très bien définie au sein de la bille silicate. Ce résultat confirme celui de la diffraction des rayons X, la structure est hexagonale cylindrique avec une distance interplans d'environ 4 nm.

### 2) Fonctionnalisation de la silice par un ORMOSIL® et la nature de l'ORMOSIL®:

La morphologie des membranes PVBu-SiO₂-D et PVBu-SiO₂-E a été observée en microscopie électronique à balayage dont les clichés sont présentés sur les figures 7A et 7B.

Figure 7A : micrographie en coupe de la membrane PVBu-SiO₂-D (échelle 10 µm).

Figure 7B : micrographie en coupe de la membrane PVBu-SiO₂-E (échelle 3 µm).

On observe des inclusions sphériques de taille plus petite (1 µm) dans les deux échantillons, ces inclusions sont monodisperses et réparties de manière homogène. La fonctionnalisation de la silice gère l'organisation micronique de la membrane en augmentant la compatibilité silice/polymère.

La figure 8 présente les diagrammes de diffraction au bas angles de ces deux membranes comparés à celui de la membrane PVBu-SiO₂-F.

Le diagramme du haut est celui pour la membrane PVBu-SiO₂-F ; le diagramme du milieu est celui pour la membrane PVBu-SiO₂-D : -Ph et le diagramme du bas est celui pour la membrane PVBu-SiO₂-E : -P(O)(OEt)₂.

Ils mettent en évidence une organisation mésoporeuse avec une mésostructure plus ou moins définie. Dans le cas, de l'échantillon PVBu-SiO₂-F dont la membrane est rigide et semi-opaque à l'oeil laissant supposer une inhomogénéité dans la distribution du silicate, il semble que deux organisations co-existent.

### 3) Nature du tensioactif :

La morphologie de la membrane PVBu-SiO₂-C a été observée en microscopie électronique à balayage et est comparée à la PVBu-SiO₂-B. Les clichés sont présentés sur les figures 9A et 9B.

Figure 9A : micrographie en coupe de la membrane PVBu-SiO₂-B (échelle 20 µm).

Figure 9B : micrographie en coupe de la membrane PVBu-SiO₂-C (échelle 3 µm).

On observe des inclusions sphériques de taille plus petite (1 µm) et réparties de manière homogène dans la membrane quand on utilise un surfactant non ionique PVBu-SiO₂-C. L'utilisation de ce type de surfactant gère l'organisation micronique de la membrane en augmentant la compatibilité surfactant/silice/polymère.

La figure 10 présente les diagrammes de diffraction aux bas angles de ces deux membranes. Le diagramme du haut est le diagramme pour la membrane PVBu-SiO₂-B : CTAB et le diagramme du bas est le diagramme pour la membrane PVBu-SiO₂-C : Brij®30.

Ce diffractogramme met en évidence une organisation mésoporeuse avec une mésostructure plus fine dans le cas de PVBu-SiO₂-B. Mais dans ce cas, il apparaît une séparation de phase du silicate vu le caractère ionique en surface.

### BIBLIOGRAPHIE

(1) G. Alberti and M. Casciola Solid state protonic conductors, present main applications and future prospects, Solid State Ionics 2001, 145, 3-16.
(2) B. Bonnet, D. J. Jones, J. Roziere, L. Tchicaya, G. Alberti, M. Casciola, L. Massinelli, B. Bauer, A. Peraio and E. Ramunni Hybrid organic-inorganic membranes for a medium temperature fuel cell, Journal of New Materials for Electrochemical Systems 2000, 3, 87-92.
(3) P. Genova-Dimitrova, B. Baradie, D. Foscallo, C. Poinsignon and J. Y. Sanchez Ionomeric membranes for proton exchange membrane fuel cell (PEMFC): sulfonated polysulfone associated with phosphatoantimonic acid, Journal of Membrane Science 2001, 185, 59-71.
(4) N. Miyake, J. S. Wainright and R. F. Savinell Evaluation of a sol-gel derived Nafion/silica hybrid membrane for proton electrolyte membrane fuel cell applications - I. Proton conductivity and water content, Journal of the Electrochemical Society 2001, 148, A898-A904.
(5) C. Yang, S. Srinivasan, A. S. Arico, P. Creti, V. Baglio and V. Antonucci Composition Nafion/zirconium phosphate membranes for direct methanol fuel cell operation at high temperature, Electrochemical & Solid-State Letters 2001, 4, A31-A34.
(6) J. M. Fenton, H. R. Kunz and J.-C. Lin, Improved membrane electrode assemblies using ionic composite membranes for fuel cells, 2002, WO0223646.
(7) O. J. Murphy and A. J. Cisar ,Composite membrane suitable for use in electrochemical devices, 2000, WO00063995.
(8) K. T. Adjemian, S. J. Lee, S. Srinivasan, J. Benziger and A. B. Bocarsly Silicon oxide Nafion composite membranes for proton-exchange membrane fuel cell operation at 80-140 degrees C, Journal of the Electrochemical Society 2002, 149, A256-A261.
(9) B. Baradie, J. P. Dodelet and D. Guay Hybrid Nafion (R)-inorganic membrane with potential applications for polymer electrolyte fuel cells, Journal of Electroanalytical Chemistry 2000, 489, 101-105.
(10) M. A. Harmer, Q. Sun, A. J. Vega, W. E. Farneth, A. Heidekum and W. F. Hoelderich Nafion resin-silica nanocomposite solid acid catalysts. Microstructure-processing-property correlations, Green Chemistry 2000, 2, 7-14.
(11) D. J. Jones and J. Roziere Recent advances in the functionalisation of polybenzimidazole and polyetherketone for fuel cell applications, Journal of Membrane Science 2001, 185, 41-58.
(12) K. A. Mauritz and J. T. Payne [Perfluorosulfonate ionomer]/silicate hybrid membranes via base-catalyzed in situ sol-gel process for tetraethylorthosilicate, Journal of Membrane Science 2000, 168, 39-51.
(13) S. P. Nunes and R. A. Zoppi Electrochemical impedance studies of hybrids of perfluorosulfonic acid ionomer and silicon oxide by sol-gel reaction from solution, Journal of Electroanalytical Chemistry 1998, 445, 39-45.
(14) E. Peled, T. Duvdevani, A. Melman and A. Aharon ,Fuel Cell with proton conducting membrane, 2001, WO 0154216.
(15) P. Staiti Proton conductive membranes constituted of silicotungstic acid anchored to silica-polybenzimidazole matrices, Journal of New Materials for Electrochemical Systems 2001, 4, 181-186.
(16) H. T. Wang, B. A. Holmberg, L. M. Huang, Z. B. Wang, A. Mitra, J. M. Norbeck and Y. S. Yan Nafion-bifunctional silica composite proton conductive membranes, Journal of Materials Chemistry 2002, 12, 834-837.
(17) M. Watanabe and P. Stonehart ,Polymer solid-electrolyte composition and electrochemical cell using the composition, 1996, US5523181.
(18) J. Kerres, G. Schafer and N. Nicoloso, Proton-conducting ceramic/polymer membrane for range up to 300 C, 2002, US02093008.
(19) J. Roziere, D. Jones, L. Tchicaya Boukary and B. Bauer ,Materiau hybride, utilisation dudit materiau hybride et procede de sa fabrication, 2000, WO 0205370.
(20) I. Honma ,Hight temperature proton conductive organic-inorganic composite membranes and their manufacture, 2000, JP00090946.
(21) U. L. Stangar, N. Groselj, B. Orel, A. Schmitz and P. Colomban Proton-conducting sol-gel hybrids containing heteropoly acids, Solid State Ionics 2001, 145, 109-118.
(22) Y. Park and M. Nagai Proton exchange nanocomposite membranes based on 3-glycidoxypropyltrimethoxysilane, silicotungstic acid and alpha-zirconium phosphate hydrate, Solid State Ionics 2001, 145, 149-160.
(23) F. M. Vichi, M. T. Colomer and M. A. Anderson Nanopore ceramic membranes as novel electrolytes for proton exchange membranes, Electrochemical & Solid-State Letters 1999, 2, 313-316.
(24) M. T. Colomer and M. A. Anderson High porosity silica xerogels prepared by a particulate sol-gel route: pore structure and proton conductivity, Journal of Non-Crystalline Solids 2001, 290, 93-104.
(25) A. Sayari and S. Hamoudi Periodic mesoporous silica-based organic - Inorganic nanocomposite materials, Chemistry of Materials 2001, 13, 3151-3168.
(26) A. Matsuda, Y. Nono, T. Kanzaki, K. Tadanaga, M. Tatsumisago and T. Minami Proton conductivity of acid-impregnated mesoporous silica gels prepared using surfactants as a template, Solid State Ionics 2001, 145, 135-140.
(27) S. Nishiwaki, K. Tadanaga, M. Tatsumisago and T. Minami Preparation and proton conductivity of surfactant-templated mesoporous silica gels impregnated with protonic acids, Journal of the American Ceramic Society 2000, 83, 3004-3008.
(28) A. Matsuda, T. Kanzaki, K. Tadanaga, T. Kogure, M. Tatsumisago and T. Minami Sol-gel derived porous silica gels impregnated with sulfuric acid - Pore structure and proton conductivities at medium temperatures, Journal of the Electrochemical Society 2002, 149, E292-E297.
(29) I. Diaz, C. Marquez-Alvarez, F. Mohino, J. Perez-Pariente and E. Sastre A novel synthesis route of well ordered, sulfur-bearing MCM-41 catalysts involving mixtures of neutral and cationic surfactants, Microporous & Mesoporous Materials 2001, 44, 295-302.
(30) D. Margolese, J. A. Melero, S. C. Christiansen, B. F. Chmelka and G. D. Stucky Direct syntheses of ordered SBA-15 mesoporous silica containing sulfonic acid groups, Chemistry of Materials 2000, 12, 2448-2459.
(31) M. H. Lim, C. F. Blanford and A. Stein Synthesis of ordered microporous silicates with organosulfur surface groups and their applications as solid acid catalysts, Chemistry of Materials 1998, 10, 467-+.
(32) R. J. P. Corriu, L. Datas, Y. Guari, A. Mehdi, C. Reye and C. Thieuleux Ordered SBA-15 mesoporous silica containing phosphonic acid groups prepared by a direct synthetic approach, Chemical Communications 2001, 763-764.
(33) S. Mikhailenko, D. Desplantier-Giscard, C. Danumah and S. Kaliaguine Solid electrolyte properties of sulfonic acid functionalized mesostructured porous silica, Microporous & Mesoporous Materials 2002, 52, 29-37.
(34) GJD. Soler-illia, C. Sanchez, B. Lebeau, J. Patarin. Chemical strategies to design textured materials : From microporous and mesoporous oxides to nanonetworks and hierarchical structures, Chemical Reviews, 102(11) : 4093-4138, 2002 Nov.

## Revendications

1. Matériau hybride organique-inorganique comprenant deux phases :
- une première phase minérale comprenant un réseau mésoporeux structuré à porosité ouverte, à savoir une mésostructure, présentant un agencement spatial organisé de mésopores dont la taille est de 1 à 100 nm, avec une périodicité spatiale des pores **caractérisée par** l'apparition d'au moins un pic à bas angle dans un diagramme de diffusion des rayons X, ledit pic étant associé à une distance de répétition qui est comprise entre 2 et 50 nm, et ladite mésostructure étant vérifiée par microscopie électronique en transmission ; et
- une deuxième phase organique comprenant un polymère organique, ladite phase organique n'étant pas présente à l'intérieur des mésopores du réseau mésoporeux structuré de la première phase minérale ;
- éventuellement, en outre, une troisième phase, à l'intérieur des mésopores, constituée par au moins un agent tensioactif .

2. Matériau selon la revendication 1, dans lequel ledit au moins un agent tensioactif est un polymère tensioactif, ledit polymère tensioactif éventuel et ledit polymère organique de la phase organique étant différents aussi bien au niveau de leur structure que de leurs effets, le polymère de la phase organique étant un polymère qualifié de polymère mécaniquement structurant, et le polymère tensioactif éventuel étant un polymère qualifié de polymère texturant.

3. Matériau selon la revendication 1 ou 2, dans lequel la phase minérale et la phase organique sont continues et entremêlées.

4. Matériau selon la revendication 1 ou 2, dans lequel la phase minérale est discontinue et dispersée dans la phase organique qui est continue.

5. Matériau selon l'une quelconque des revendications précédentes, dans lequel la phase minérale présente des fonctions conductrices et/ou hydrophiles sur les surfaces de ses pores.

6. Matériau selon l'une quelconque des revendications précédentes, dans lequel la phase organique présente des fonctions conductrices et/ou hydrophiles.

7. Matériau selon l'une quelconque des revendications précédentes, dans lequel la troisième phase constituée par au moins un agent tensioactif présente des fonctions conductrices et/ou hydrophiles.

8. Matériau selon l'une quelconque des revendications 5 à 7, dans lequel lesdites fonctions conductrices sont choisies parmi les groupes échangeurs de cations.

9. Matériau selon la revendication 8, dans lequel lesdits groupes échangeurs de cations sont choisis parmi les groupes suivants : SO₃M ; -PO₃M₂ ; -COOM ; et B(OM)₂ ; où M représente l'hydrogène, un cation métallique monovalent, ou ⁺NR¹₄, où chaque R¹ représente indépendamment un hydrogène, un radical alkyle ou un radical aryle.

10. Matériau selon l'une quelconque des revendications 5 à 7, dans lequel lesdites fonctions conductrices sont choisies parmi les groupes échangeurs d'anions.

11. Matériau selon la revendication 10, dans lequel lesdits groupes échangeurs d'anions sont choisis parmi les groupes suivants : pyridyle, imidazolyle, pyrazolyle ; triazolyle ; les radicaux de formule -⁺NR²₃X⁻, où X représente un anion comme par exemple F, Cl, Br, I, NO₃, SO₄H ou OR, R étant un radical alkyle ou un radical aryle, et où chaque R² représente indépendamment un hydrogène, un radical alkyle, ou un radical aryle ; et les radicaux basiques aromatiques ou non aromatiques contenant au moins un radical choisi parmi les radicaux imidazole, vinylimidazole, pyrrazole, oxazole, carbazole, indole, isoindole, dihydrooxazole, isooxazole, thiazole, benzothiazole, isothiazole, benzoimidazole, indazole, 4,5-dihydropyrazole, 1,2,3-oxadiazole, furazane, 1,2,3-thiadiazole, 1,2,4-thiadiazole, 1,2,3-benzotriazole, 1,2,4-triazole, tetrazole, pyrrole, aniline, pyrrolidine, et pyrrazole.

12. Matériau selon l'une quelconque des revendications précédentes, dans lequel la phase minérale est constituée par au moins un oxyde choisi parmi les oxydes de métaux, les oxydes de métalloïdes et les oxydes mixtes de ceux-ci.

13. Matériau selon la revendication 12, dans lequel ledit oxyde est choisi parmi les oxydes de silicium, titane, zirconium, hafnium, aluminium, tantale, étain, terres rares telles que europium, cérium, lanthane et gadolinium, et les oxydes mixtes de ceux-ci.

14. Matériau selon l'une quelconque des revendications précédentes, dans lequel le réseau mésoporeux présente une structure organisée avec un motif de répétition.

15. Matériau selon la revendication 14 dans lequel le réseau mésoporeux présente une structure cubique, hexagonale, lamellaire, vermiculaire, vésiculaire ou bicontinue.

16. Matériau selon l'une quelconque des revendications précédentes, dans lequel le polymère organique est un polymère thermostable.

17. Matériau selon la revendication 16, dans lequel le polymère organique est choisi parmi les polyéthercétones (PEK, PEEK, PEEKK) ; les polysulfones (PSU) ; les polyéthersulfones ; les polyphényléthersulfones (PPSU) ; les copolymères styrène/éthylène (SES), styrène/butadiène (SBS), styrène/isoprène (SIS) ; les polyphénylènes; les polyimidazoles; les polyimides (PI) ; les polyamideimides (PAI) ; les polyanilines ; les polypyrroles ; les polysulfonamides ; les polypyrazoles ; les polyoxazoles ; les polyéthers ; les poly(acide (méth)acryliques) ; les polyacrylamides ; les polyvinyles ; les résines acétales ; les polyvinylpyridines ; les polyvinylpyrrolidones ; les polyoléfines, telles que les polyéthylènes, les polypropylènes, les polyisobutylènes ; les poly(oxyde de styrène) ; les résines fluorées et les polyperfluorocarbones ; les poly(fluorure de vinylidènes) (PVDF) ; les polychlorotrifluoroéthylènes (PCTFE) ; les polyhexafluoropropènes (HFP) ; les perfluoroalcoxydes (PFA) ; les polyphosphazènes ; les élastomères siliconés ; les copolymères séquencés comprenant au moins une séquence constituée par un polymère choisi parmi les polymères ci-dessus.

18. Matériau selon l'une quelconque des revendications 1 à 17, dans lequel l'agent tensioactif est choisi parmi : les surfactants ; les acides ; les bases ; les phospholipides ; les copolymères doublement hydrophiles dont l'amphiphilie est générée in situ par interaction avec un substrat ; les copolymères multiblocs amphiphiles comportant au moins un bloc hydrophobe associé à au moins un bloc hydrophile.

19. Membrane comprenant le matériau selon l'une quelconque des revendications précédentes, éventuellement déposé sur un support.

20. Electrode comprenant le matériau selon l'une quelconque des revendications 1 à 18.

21. Pile à combustible comprenant au moins une membrane selon la revendication 19 et/ou une électrode selon la revendication 20.

22. Procédé de préparation du matériau selon l'une quelconque des revendications 1 à 18, dans lequel on réalise les étapes suivantes :
a) - on prépare une solution, dans un solvant, d'un précurseur minéral A destiné à constituer la phase minérale mésoporeuse, et éventuellement on l'hydrolyse et on la laisse mûrir;
b) on prépare une solution dans un solvant, d'un agent tensioactif D, texturant de la phase minérale mésoporeuse ;
c) - on prépare une solution dans un solvant, d'un polymère organique E;
d) -on ajoute, à l'issue des étapes a), b) et c), la solution d'agent texturant D à la solution de polymère organique E et on homogénéise, puis on ajoute sous agitation au mélange des solutions d'agent tensioactif D et de polymère organique E obtenu la solution de précurseur minéral A ; ou bien
on ajoute la solution de précurseur A à la solution d'agent tensioactif D et on homogénéise, puis on ajoute sous agitation la solution de polymère organique E ;ou bien
on ajoute la solution de précurseur A à la solution de polymère organique E et on homogénéise, puis on ajoute sous agitation la solution d'agent tensioactif D ;
moyennant quoi, on obtient une solution hybride organique-inorganique ;
et on laisse éventuellement mûrir la solution hybride organique-inorganique ainsi obtenue ;
e) -on dépose ou on imprègne la solution hybride organique-inorganique sur un support ;
f) - on réalise une évaporation des solvants dans des conditions contrôlées de pression, de température et d'humidité ;
g) - on effectue un traitement thermique pour réaliser une consolidation du matériau déposé ou imprégné ;
h) - on élimine éventuellement, totalement ou partiellement, le tensioactif D ;
i) - on sépare ou on élimine éventuellement le support.

23. Procédé selon la revendication 22, dans lequel on ajoute en outre un agent chélatant B à la solution de précurseur minéral A.

24. Procédé selon l'une quelconque des revendications 22 à 23, dans lequel on ajoute en outre à la solution de précurseur minéral A, un composé C, porteur, d'une part, de fonctions conductrices et/ou hydrophiles et/ou de fonctions précurseurs de fonctions conductrices et/ou hydrophiles, et, d'autre part, de fonctions susceptibles de se lier à la surface des pores du réseau mésoporeux.

25. Procédé selon l'une quelconque des revendications 22 à 24, dans lequel le procédé comprend en outre une étape finale de traitement pour libérer ou générer des fonctions conductrices et/ou hydrophiles sur la surface des pores du matériau.

26. Procédé selon l'une quelconque des revendications 22 à 25, dans lequel on laisse mûrir la solution A a une température de 0°C à 300°C; à une pression de 100 Pa à 5.10⁶ Pa ; pendant une durée de quelques minutes à quelques jours.

27. Procédé selon la revendication 26, dans lequel on laisse mûrir la solution A pendant une durée d'une heure à une semaine.

28. Procédé selon l'une quelconque des revendications 22 à27, dans lequel on laisse mûrir la solution hybride organique-inorganique obtenue dans l'étape d) à une température de 0 à 300°C ; à une pression de 100 Pa à 5.10⁶ Pa ; pendant une durée de quelques minutes à quelques jours.

29. Procédé selon la revendication 28, dans lequel on laisse mûrir la solution hybride organique-inorganique obtenue dans l'étape d) pendant une durée d'une heure à une semaine.

30. Procédé selon l'une quelconque des revendications 22 à 29, dans lequel on évapore les solvants à une température de 0 à 300°C ; à une humidité relative (HR) de 0 à 100%.

31. Procédé selon l'une quelconque des revendications 22 à 30, dans lequel, dans l'étape e), le dépôt ou l'imprégnation de la solution hybride organique-inorganique sur un support est réalisé par un procédé choisi parmi le procédé de dépôt par enduction centrifuge dit « spin-coating », le procédé de dépôt par trempage-retrait dit « dip-coating », le procédé de dépôt par enduction laminaire dit « meniscus-coating », le procédé de dépôt par pulvérisation dit « spray-coating », le procédé de dépôt par coulée et le procédé de dépôt par évaporation.

## Patentansprüche

1. Organisch-anorganisches Hybridmaterial, enthaltend zwei Phasen:
- eine mineralische erste Phase mit einem strukturierten, mesoporösen Netzwerk mit offener Porosität, nämlich einer Mesostruktur, die eine organisierte, räumliche Anordnung von Mesoporen aufweist, deren Größe 1 bis 100 nm beträgt, mit einer räumlichen Periodizität der Poren, die sich durch das Auftreten von zumindest einer Spitze ("Peak") mit niedrigem Winkel in einem Röntgenstreudiagramm auszeichnet, wobei der genannten Spitze ein Wiederholungsabstand zwischen 2 und 50 nm zugeordnet ist und die Mesostruktur durch Transmissions-Elektronenmikroskopie überprüft wird; und
- eine organische zweite Phase, die ein organisches Polymer umfasst, wobei die organische Phase nicht innerhalb der Mesoporen des strukturierten, mesoporösen Netzwerks der mineralischen ersten Phase vorhanden ist;
- gegebenfalls ferner eine dritte Phase innerhalb der Mesoporen, bestehend aus mindestens einem Tensid.

2. Material nach Anspruch 1, wobei das zumindest eine Tensid ein Tensidpolymer ist, wobei das optionale Tensidpolymer und das organische Polymer der organischen Phase sich sowohl in ihrer Struktur als auch in ihren Wirkungen unterscheiden, wobei das Polymer der organischen Phase ein Polymer ist, das als mechanisch strukturierendes Polymer bezeichnet wird, und das optionale Tensidpolymer ein Polymer ist, das als texturierendes Polymer bezeichnet wird.

3. Material nach Anspruch 1 oder 2, wobei die mineralische Phase und die organische Phase kontinuierlich und miteinander verflochten sind.

4. Material nach Anspruch 1 oder 2, wobei die mineralische Phase diskontinuierlich ist und in der organischen Phase, die kontinuierlich ist, dispergiert ist.

5. Material nach einem der vorangehenden Ansprüche, wobei die mineralische Phase an den Oberflächen ihrer Poren leitfähige und/oder hydrophile Funktionen aufweist.

6. Material nach einem der vorangehenden Ansprüche, wobei die organische Phase leitfähige und/oder hydrophile Funktionen aufweist.

7. Material nach einem der vorangehenden Ansprüche, wobei die dritte Phase, die aus zumindest einem Tensid besteht, leitfähige und/oder hydrophile Funktionen aufweist.

8. Material nach einem der Ansprüche 5 bis 7, wobei die leitfähigen Funktionen ausgewählt sind aus Kationenaustauschergruppen.

9. Material nach Anspruch 8, wobei die Kationenaustauschergruppen ausgewählt sind aus den nachfolgenden Gruppen: SO₃M; -PO₃M₂; -COOM; und B(OM)₂; worin M Wasserstoff, ein einwertiges Metallkation oder ⁺NR¹₄ darstellt, worin R¹ unabhängig Wasserstoff, einen Alkylrest oder einen Arylrest darstellt.

10. Material nach einem der Ansprüche 5 bis 7, wobei die leitfähigen Funktionen ausgewählt sind Anionenaustauschergruppen.

11. Material nach Anspruch 10, wobei die Anionenaustauschergruppen ausgewählt sind aus den nachfolgenden Gruppen: Pyridyl, Imidazolyl, Pyrazolyl; Triazolyl; Reste der Formel -⁺NR²₃X-, worin X ein Anion wie beispielsweise F, Cl, Br, I, NO₃, SO₄H oder OR darstellt, wobei R ein Alkylrest oder Arylrest ist, und worin, jede R² unabhängig Wasserstoff, einen Alkylrest oder einen Arylrest darstellt; und aromatische oder nicht-aromatische basische Reste, die zumindest einen Rest, ausgewählt aus Imidazol-, Vinylimidazol-, Pyrrazol-, Oxazol-, Carbazol-, Indol-, Isoindol-, Dihydrooxazol-, Isooxazol-, Thiazol-, Benzothiazol-, Isothiazol-, Benzimidazol-, Indazol-, 4,5-Dihydropyrazol-, 1,2,3-Oxadiazol-, Furazan-, 1,2,3-Thiadiazol-, 1,2,4-Thiadiazol-, 1,2,3-Benzotriazol-, 1,2,4-Triazol-, Tetrazol-, Pyrrol-, Anilin-, Pyrrolidin- und Pyrazol-Resten, enthalten.

12. Material nach einem der vorangehenden Ansprüche, wobei die mineralische Phase aus mindestens einem Oxid, ausgewählt aus Metalloxiden, Metalloidoxiden und deren Mischoxiden, besteht.

13. Material nach Anspruch 12, wobei das Oxid ausgewählt ist aus Silicium-, Titan-, Zirconium-, Hafnium-, Aluminium-, Tantal-, Zinn-Oxiden, Oxiden von seltenen Erden wie Europium, Cerium, Lanthan und Gadolinium, und deren Mischoxide.

14. Material nach einem der vorangehenden Ansprüche, wobei das mesoporöse Netzwerk eine organisierte Struktur mit einem Wiederholungsmuster aufweist.

15. Material nach Anspruch 14, wobei das mesoporöse Netzwerk eine kubische, hexagonale, lamellare, vermikulare, vesikuläre oder bikontinuierliche Struktur aufweist.

16. Material nach einem der vorangehenden Ansprüche, wobei das organische Polymer ein thermostabiles Polymer ist.

17. Material nach Anspruch 16, wobei das organische Polymer ausgewählt ist aus Polyetherketonen (PEK, PEEK, PEEKK); Polysulfonen (PSU); Polyethersulfonen; Polyphenylethersulfonen (PPSU); Copolymeren aus Styrol/Ethylen (SES), Styrol/Butadien (SBS), Styrol/Isopren (SIS); Polyphenylenen; Polyimidazolen; Polyimiden (PI); Polyamidimiden (PAI); Polyanilinen; Polypyrrolen; Polysulfonamiden; Polypyrazolen; Polyoxazolen; Polyethern; Poly((meth)acrylsäuren; Polacrylamiden; Polyvinylen; Acetalharzen; Polyvinylpyridinen; Polyvinylpyrrolidonen; Polyolefinen, wie Polyethylenen, Polypropylenen, Polyisobutylenen; Poly(Styroloxiden); fluorierten Harzen und Polyperfluorkohlenstoffen; Polyvinylidenfluoriden (PVDF); Polychlorotrifluorethylenen (PCTFE); Polyhexafluorpropenen (HFP); Perfluoralkoxiden (PFA); Polyphosphazenen; Siliconelastomeren; Blockcopolymeren mit zumindest einem Block bestehend aus einem Polymer, ausgewählt aus den obigen Polymeren.

18. Material nach einem der Ansprüche 1 bis 17, wobei das Tensid ausgewählt ist aus: oberflächenaktiven Stoffen ("Surfactants"); Säuren; Basen; Phospholipiden; doppelt hydrophilen Copolymeren, deren Amphiphilie in situ durch Wechselwirkung mit einem Substrat erzeugt wird; amphiphilen Multiblock-Copolymeren mit zumindest einem hydrophoben Block, der mit zumindest einem hydrophilen Block assoziiert ist.

19. Membran, enthaltend das Material nach einem der vorangehenden Ansprüche, gegebenenfalls abgeschieden auf einen Träger.

20. Elektrode, enthaltend das Material nach einem der Ansprüche 1 bis 18.

21. Brennstoffzelle, enthaltend zumindest eine Membran nach Anspruch 19 und/oder eine Elektrode nach Anspruch 20.

22. Verfahren zum Herstellen des Materials nach einem der Ansprüche 1 bis 18, wobei die nachfolgenden Schritte ausgeführt werden:
a) Herstellen einer Lösung eines mineralischen Vorläufers A, der die mesoporöse mineralische Phase bilden soll, in einem Lösungsmittel, und gegebenenfalls Hydrolyse und Reifenlassen;
b) Herstellen einer Lösung eines Tensids D als Texturiermittel der mesoporösen mineralischen Phase in einem Lösungsmittel;
c) Herstellen einer Lösung eines organischen Polymers E in einem Lösungsmittel;
d) am Ende von Schritt a), b) und c) Hinzufügen der Texturiermittellösung D zu der organischen Polymerlösung E und Homogenisieren, dann Hinzufügen der Lösung des mineralischen Vorläufers A unter Rühren zu dem erhaltenen Gemisch aus den Lösungen aus Tensid D und organischem Polymer E; oder Hinzufügen der Vorläuferlösung A zu der Tensidlösung D und Homogenisieren, dann Hinzufügen der organischen Polymerlösung E unter Rühren; oder Hinzufügen der Vorläuferlösung A zu der organischen Polymerlösung E und Homogenisieren, dann Hinzufügen der Tensidlösung D unter Rühren; wodurch eine organisch-anorganische Hybridlösung erhalten wird;
und gegebenenfalls Reifenlassen der so erhaltenen organisch-anorganischen Hybridlösung;
e) Abscheiden der organisch-anorganischen Hybridlösung auf einen Träger oder Imprägnieren damit;
f) Durchführen einer Verdampfung der Lösungsmittel unter kontrollierten Druck-, Temperatur- und Feuchtigkeitsbedingungen;
g) Durchführen einer Wärmebehandlung zum Bewirken einer Verfestigung des abgeschiedenen oder imprägnierenden Materials;
h) gegebenenfalls Entfernen des Tensids D ganz oder teilweise;
i) gegebenenfalls Abtrennen bzw. Entfernen des Trägers.

23. Verfahren nach Anspruch 22, wobei ferner der Lösung des mineralischen Vorläufers A ein Chelatbildner B hinzugefügt wird.

24. Verfahren nach einem der Ansprüche 22 bis 23, wobei ferner der Lösung des mineralischen Vorläufers A eine Verbindung C hinzugefügt wird, die einerseits Träger von leitfähigen und/oder hydrophilen Funktionen und/oder von Vorläuferfunktionen von leitfähigen und/oder hydrophilen Funktionen und andererseits Träger von Funktionen ist, die sich an die Porenoberfläche des mesoporösen Netzwerks binden können.

25. Verfahren nach einem der Ansprüche 22 bis 24, wobei das Verfahren ferner einen abschließenden Behandlungsschritt zum Freigeben oder Erzeugen von leitfähigen und/oder hydrophilen Funktionen auf der Porenoberfläche des Materials umfasst.

26. Verfahren nach einem der Ansprüche 22 bis 25, wobei die Lösung A bei einer Temperatur von 0°C bis 300°C, einem Druck von 100 Pa bis 5.10⁶ Pa für einen Zeitraum von einigen Minuten bis zu einigen Tagen reifen gelassen wird.

27. Verfahren nach Anspruch 26, wobei die Lösung A wird für einen Zeitraum von einer Stunde bis zu einer Woche reifen gelassen wird.

28. Verfahren nach einem der Ansprüche 22 bis 27, wobei die in Schritt d) erhaltene organisch-anorganische Hybridlösung bei einer Temperatur von 0 bis 300°C und einem Druck von 100 Pa bis 5.10⁶ Pa für einen Zeitraum von einigen Minuten bis zu einigen Tagen reifen gelassen wird.

29. Verfahren nach Anspruch 28, wobei die in Schritt d) erhaltene organisch-anorganische Hybridlösung für einen Zeitraum von einer Stunde bis zu einer Woche reifen gelassen wird.

30. Verfahren nach einem der Ansprüche 22 bis 29, wobei die Lösungsmittel bei einer Temperatur von 0 bis 300°C und einer relativen Feuchtigkeit (HR) von 0 bis 100% verdampft werden.

31. Verfahren nach einem der Ansprüche 22 bis 30, wobei in Schritt e) die Abscheidung oder Imprägnierung mit der organisch-anorganischen Hybridlösung auf einen Träger durch ein Verfahren erfolgt, das ausgewählt ist aus dem Abscheidungsverfahren durch Schleuderbeschichtung, "spin-coating" genannt, dem Abscheidungsverfahren durch Tauchbeschichtung, "dip-coating" genannt, dem Abscheidungsverfahren durch laminare Beschichtung, "meniscus-coating" genannt, dem Abscheidungsverfahren durch Aufsprühen, "spray-coating" genannt, dem Abscheidungsverfahren durch Gießen und dem Abscheidungsverfahren durch Verdampfen.

## Claims

1. An organic-inorganic hybrid material comprising two phases:
- a first, mineral phase comprising a structured mesoporous network with open porosity, namely a mesostructure, exhibiting an organized spatial layout of mesopores having a size from 1 to 100 nm, with a spatial periodicity of the pores **characterized by** the appearance of at least one low-angle peak in an X-Ray scattering diagram, said peak being associated with a repeat distance which is between 2 and 50 nm, and said mesostructure being verified by transmission electron microscopy; and
- a second, organic phase comprising an organic polymer, said organic phase being not present inside the mesopores of the structured mesoporous network of the first mineral phase ;
- optionally, further, a third phase, inside the pores, consisting of at least one surface active agent.

2. The material according to claim 1, wherein said at least one surface active agent is a surface active polymer, said optional surface active polymer and said organic polymer of the organic phase being different in terms both of their structure and of their effects, the polymer of the organic phase being a polymer termed mechanically structuring polymer, and the optional surface active polymer being termed texturizing polymer.

3. The material according to claim 1 or 2, wherein the mineral phase and the organic phase are continuous and intermingled.

4. The material according to claim 1 or 2, wherein the mineral phase is discontinuous and dispersed in the organic phase, which is continuous.

5. The material according to any one of the preceding claims, wherein the mineral phase has conductive and/or hydrophilic functions on the surfaces of its pores.

6. The material according to any one of the preceding claims, wherein the organic phase has conductive and/or hydrophilic functions.

7. The material according to any one of the preceding claims, wherein the third phase, consisting of at least one surface active agent, has conductive and/or hydrophilic functions.

8. The material according to any one of claims 5 to 7, wherein said conductive functions are selected from cation exchange groups.

9. The material according to claim 8, wherein said cation exchange groups are selected from the following groups: SO₃M; -PO₃M₂; -COOM and B(OM)₂, where M represents hydrogen, a monovalent metal cation, or ⁺NR¹₄, where each R¹, independently represents a hydrogen, an alkyl radical or an aryl radical.

10. The material according to any one of claims 5 to 7, wherein said conductive functions are selected from anion exchange groups.

11. The material according to claim 10, wherein said anion exchange groups are selected from the following groups: pyridyl, imidazolyl, pyrazolyl; triazolyl; the radicals of formula -⁺NR²₃X⁻, where X represents an anion such as, for example, F, Cl, Br, I, NO₃, SO₄H or OR, R being an alkyl radical or an aryl radical, and where each R², independently represents a hydrogen, an alkyl radical or an aryl radical; and the basic aromatic or nonaromatic radicals containing at least one radical selected from imidazole, vinylimidazole, pyrazole, oxazole, carbazole, indole, isoindole, dihydrooxazole, isoxazole, thiazole, benzothiazole, isothiazole, benzimidazole, indazole, 4,5-dihydropyrazole, 1,2,3-oxadiazole, furazan, 1,2,3-thiadiazole, 1,2,4-thiadiazole, 1,2,3-benzotriazole, 1,2,4-triazole, tetrazole, pyrrole, aniline, pyrrolidine, and pyrazole radicals.

12. The material according to any one of the preceding claims, wherein the mineral phase consists of at least one oxide selected from metal oxides, metalloid oxides and mixed oxides thereof.

13. The material according to claim 12, wherein said oxide is selected from the oxides of silicon, titanium, zirconium, hafnium, aluminum, tantalum, tin, rare earths such as europium, cerium, lanthanum, and gadolinium, and mixed oxides thereof.

14. The material according to any one of the preceding claims, wherein the mesoporous network has an organized structure with a repeating unit.

15. The material according to claim 14, wherein the mesoporous network has a cubic, hexagonal, lamellar, vermicular, vesicular or bicontinuous structure.

16. The material according to any one of the preceding claims, wherein the organic polymer is a thermostable polymer.

17. The material according to claim 16, wherein the organic polymer is selected from polyetherketones (PEK, PEEK, PEEKK); polysulfones (PSU); polyethersulfones; polyphenylethersulfones (PPSU); styrene/ethylene (SES), styrene/butadiene (SBS), and styrene/isoprene (SIS) copolymers; polyphenylenes; polyimidazoles; polyimides (PI); polyamideimides (PAI); polyanilines; polypyrroles; polysulfonamides; polypyrazoles; polyoxazoles; polyethers; poly((meth)acrylic acid)s; polyacrylamides; polyvinyls; acetal resins; polyvinylpyridines; polyvinylpyrrolidones; polyolefins, such as polyethylenes, polypropylenes, and polyisobutylenes; poly(styrene oxide)s; fluoro resins and polyperfluorocarbons; poly(vinylidene fluoride)s (PVDF); polychlorotrifluoroethylenes (PCTFE); polyhexafluoropropenes (HFP); perfluoroalkoxides (PFA); polyphosphazenes; silicone elastomers; and block copolymers comprising at least one block consisting of a polymer selected from the above polymers.

18. The material according to any one of claims 1 to 17, wherein the surface active agent is selected from: surfactants; acids; bases; phospholipids; doubly hydrophilic copolymers whose amphiphilicity is generated in situ by interaction with a substrate; and amphiphilic multiblock copolymers comprising at least one hydrophobic block linked with at least one hydrophilic block.

19. A membrane comprising the material according to any one of the preceding claims, optionally deposited on a support.

20. An electrode comprising the material according to any one of claims 1 to 18.

21. A fuel cell comprising at least one membrane according to claim 19 and/or one electrode according to claim 20.

22. A process for producing the material according to any one of claims 1 to 18, wherein the following steps are carried out:
a) - a solution is prepared, in a solvent, of a mineral precursor A intended to constitute the mesoporous mineral phase, and optionally this solution is hydrolyzed and allowed to age;
b) a solution is prepared, in a solvent, of a surface active agent D, a texturizing agent for the mesoporous mineral phase;
c) - a solution is prepared, in a solvent, of an organic polymer E;
d) - at the end of steps a), b) and c), the solution of texturizing agent D is added to the solution of organic polymer E and homogeneization is carried out, and then the solution of mineral precursor A is added with stirring to the obtained mixture of the solutions of surface active agent D and of organic polymer E; or else
the solution of precursor A is added to the solution of surface active agent D and homogeneization is carried out, and then the solution of organic polymer E is added with stirring; or else
the solution of precursor A is added to the solution of organic polymer E and homogeneization is carried out, and then the solution of surface active agent D is added with stirring;
whereby an organic-inorganic hybrid solution is obtained ;
and the organic-inorganic hybrid solution thus obtained is optionally allowed to age;
e) - the organic-inorganic hybrid solution is deposited or impregnated on a support;
f) - solvents are evaporated under controlled pressure, temperature, and humidity conditions;
g) - a heat treatment is carried out to consolidate the deposited or impregnated material;
h) - the surface active agent D is optionally removed completely or partially;
i) - the support is separated or removed, optionally.

23. The process according to claim 22, wherein a chelating agent B is further added to the solution of mineral precursor A.

24. The process according to any one of claims 22 to 23, wherein, to the solution of mineral precursor A, a compound C is further added which carries, on the one hand, conductive and/or hydrophilic functions and/or precursor functions of conductive and/or hydrophilic functions, and, on the other hand, functions capable of undergoing bonding to the surface of the pores of the mesoporous network.

25. The process according to any one of claims 22 to 24, wherein the process further comprises a final step of treatment to release or generate conductive and/or hydrophilic functions on the surface of the pores of the material.

26. The process according to any one of claims 22 to 25, wherein the solution A is left to age at a temperature of 0°C to 300°C; at a pressure of 100 Pa to 5·10⁶ Pa; for a time of a few minutes to a few days.

27. The process according to claim 26, wherein the solution A is left to age for a time of one hour to one week.

28. The process according to any one of claims 22 to 27, wherein the organic-inorganic hybrid solution obtained in step d) is left to age at a temperature of 0 to 300°C; at a pressure of 100 Pa to 5·10⁶ Pa; for a time of a few minutes to a few days.

29. The process according to claim 28, wherein the oganic-inorganic hydrid solution obtained in step d) is left to age for a time of one hour to one week.

30. The process according to any one of claims 22 to 29, wherein the solvents are evaporated at a temperature of 0 to 300°C; at a relative humidity (RH) of 0 to 100%.

31. The process according to any one of claims 22 to 30, wherein, in step e), the organic-inorganic hybrid solution is deposited or impregnated on a support by a method selected from the method of deposition by centrifugal coating known as spin coating, the method of deposition by immersion and withdrawal known as dip coating, the method of deposition by laminar coating known as meniscus coating, the method of deposition by spraying known as spray coating, the method of deposition by casting and the method of deposition by evaporation.
